# EUROPÄISCHE PATENTSCHRIFT

(11) **EP 1 522 722 B1**
(45) Veröffentlichungstag und Bekanntmachung des Hinweises auf die Patenterteilung: **20.12.2006**
(21) Anmeldenummer: 03103687.4
(22) Anmeldetag: 06.10.2003
(51) Int. Cl.: F02N 11/08, F02D 41/04, F04B 49/22

(54) **Brennkraftmaschine und Verfahren zum kontrollierten Abstellen einer Brennkraftmaschine**
Combustion engine and method to control stop of a combustion engine
Moteur à combustion et méthod pour controller l'arrêt d'un moteur à combustion

(43) Veröffentlichungstag der Anmeldung: 13.04.2005
(73) Patentinhaber: Ford Global Technologies, LLC, A subsidary of Ford Motor Company, Dearborn, MI 48126 (US)
(72) Erfinder: Schamel, Andreas R, 53227, Bonn (DE); Kramer, Ulrich, 51427, Bergisch Gladbach (DE); Engel, Ronald, 50226, Frechen (DE)
(74) Vertreter: Drömer, Hans-Carsten

(56) Entgegenhaltungen:
- DE-A- 10 123 037
- US-A- 5 380 169
- US-B1- 6 484 081

## Beschreibung

Die Erfindung betrifft eine Brennkraftmaschine, welche eine Ölpumpe umfaßt, die über einen Einlaß und einen Auslaß verfügt, wobei die Ölpumpe an ihrem Auslass mit einem ersten Hydraulikventil ausgestattet ist, mit welchem der Öldruck in der Ölpumpe durch Verändern des Querschnitts des Auslasses beeinflussbar ist, so dass das notwendige Antriebsmoment der Ölpumpe mittels des Hydraulikventils steuerbar wird. Brennkraftmaschinen dieser Art werden beispielsweise als Antrieb für Kraftfahrzeuge verwendet.

Eine als Ölpumpe für Kraftfahrzeugmotoren dienende Zahnringpumpe wird beispielsweise in der DE 42 09 143 C1 beschrieben, wobei diese Ölpumpe in einer mit dem Auslasskanal verbundenen Leitung ein Drosselelement aufweist.

Des Weiteren betrifft die Erfindung ein Verfahren zum kontrollierten Abstellen einer derartigen Brennkraftmaschine.

Aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, ist man bei der Entwicklung von Verbrennungsmotoren ständig bemüht, den Kraftstoffverbrauch zu minimieren. Dabei steht einerseits die verbesserte d.h. effektivere Verbrennung im Vordergrund der Bemühungen. Andererseits können aber auch bestimmte Strategien im Hinblick auf den grundsätzlichen Betrieb der Brennkraftmaschine zielführend sein.

Ein Konzept zur Verbesserung des Kraftstoffverbrauchs eines Fahrzeuges besteht beispielsweise darin, die Brennkraftmaschine - statt sie im Leelauf weiter zu betreiben - abzuschalten, wenn kein momentaner Leistungsbedarf besteht. In der Praxis bedeutet dies, daß zumindest bei Fahrzeugstillstand die Brennkraftmaschine ausgeschaltet wird. Ein Anwendungsfall ist der Stop-and-Go-Verkehr, wie er sich beispielsweise im Stau auf Autobahnen und Landstraßen einstellt. Im innerstädtischen Verkehr ist der Stop-and-Go-Verkehr infolge der vorhandenen und nicht aufeinander abgestimmten Ampelanlagen nicht mehr die Ausnahme sondern sogar die Regel. Weitere Anwendungsfälle bieten beschrankte Bahnübergänge und dergleichen.

Problematisch bei den Konzepten, welche zur Verbesserung des Kraftstoffverbrauchs die Brennkraftmaschine bei fehlendem Bedarf abschalten, ist die Notwendigkeit die Brennkraftmaschine wieder zu starten. Probleme bereitet das Neustarten, weil bei unkontrolliertem Abstellen der Brennkraftmaschine, die Kurbel- und die Nockenwelle in einer beliebigen und zudem nicht bekannten Stellung zum Stehen kommen. Folglich ist die Position der Kolben in den einzelnen Zylindern der Brennkraftmaschine ebenfalls nicht bekannt und dem Zufall überlassen. Diese Informationen sind aber für einen unkomplizierten und möglichst schnellen und damit kraftstoffsparenden Neustart unerläßlich.

Bei einer Brennkraftmaschine, die mit einer elektronisch geregelten Zündung oder einer elektronisch geregelten Einspritzung ausgestattet ist, liefern an der Kurbelwelle angeordnete Marker Signale über die notwendige Kurbelwinkelstellung an mit der Motorsteuerung verbundene Sensoren zur Steuerung des Zünd- und des Einspritzzeitpunktes. Zur Generierung dieser Signale ist es aber zunächst erforderlich, die Kurbelwelle in Drehung zu versetzen. Direkt zu Beginn des Neustarts und des Starts im allgemeinen besteht Unklarheit über den richtigen Einspritz- und Zündzeitpunkt, so daß eine Einlaufphase zur Synchronisation der Kurbelwinkelstellung einerseits und der Motorbetriebsparameter andererseits erforderlich wird. Zudem müssen Geräte zum Starten bzw. Neustarten der Brennkraftmaschine vorgesehen werden, beispielsweise ein konventioneller Anlasser oder ein ähnliches Gerät, das geeignet ist, die Kurbelwelle zwangsweise in Drehung zu versetzen, wie beispielsweise ein Elektromotor.

Um den Neustart zu vereinfachen, werden nach dem Stand der Technik verschiedene Konzepte vorgeschlagen.

Die deutsche Offenlegungsschrift DE 42 30 616 schlägt beispielsweise vor, die Winkellage der Kurbelwelle, welche beim Abschalten registriert wird, zu speichern und für den Neustart zu verwenden, so daß sofort die passenden Zündzeitpunkte und Einspritzzeitpunkte zur Verfügung stehen. Diese Vorgehensweise hat sich aber in der Praxis nicht bewährt, da die gespeicherten Informationen über die Stellung der Kurbelwelle zu ungenau waren.

Andere Lösungsansätze präferieren - wie die vorliegende Erfindung auch - Verfahren zum kontrollierten Abstellen der Brennkraftmaschine. Das kontrollierte Abstellen besteht dabei darin, ganz bestimmte Kurbelwinkelpositionen - sogenannte Vorzugspositionen - bewußt beim Abschalten der Brennkraftmaschine anzufahren. Die Endstellung der Kurbelwelle wird dabei nicht mehr dem Zufall überlassen und mehr oder weniger genau registriert, sondern es werden gezielt für den Neustart vorteilhafte Kurbelwinkelstellungen herbeigeführt.

Bei Brennkraftmaschinen mit Direkteinspritzung ist es bei bekannter Kurbelwinkelstellung sogar ohne Starter möglich aus dem Stillstand direkt zu starten bzw. neu zu starten. Dabei wird Kraftstoff direkt in die Brennräume der stillstehenden Brennkraftmaschine gespritzt und mittels einer Zündkerze gezündet, so daß die Explosion des Luft-Kraftstoffgemisches die Kolben in Bewegung bringt, wodurch die Kurbelwelle in Drehung versetzt wird.

Diese Art des Startens bzw. Neustartens erfordert aber die Einhaltung bestimmter Randbedingungen. Insbesondere muß die Kurbelwelle in einer bestimmten Stellung bzw. in einem bestimmten Bereich stehen. Insofern sind gerade bei Brennkraftmaschinen mit Direkteinspritzung Verfahren zum kontrollierten Abstellen zielführend.

Ein Verfahren zum kontrollierten Abstellen einer Brennkraftmaschine wird beispielsweise in der WO 01/48373 offenbart. Die WO 01/48373 lehrt die Anwendung eines Verfahrens, bei dem nach dem Abschalten d.h. nach Beendigung des regulären Betriebes der Brennkraftmaschine eine Verstellvorrichtung aktiviert und angesteuert wird, mit der die Kurbelwelle und/oder die Nockenwelle in eine vorgebbare vorteilhafte Winkelstellung bewegt wird. Dabei können sowohl aktive wie passive Verstellvorrichtungen zum Einsatz kommen.

Als aktive Verstellvorrichtung kann ein Elektromotor dienen, der ein Drehmoment auf die Kurbelwelle überträgt und diese nach dem Abschalten der Brennkraftmaschine in die gewünschte Position dreht, welche dann bis zum Neustarten der Brennkraftmaschine beibehalten wird. In der WO 01/48373 werden aber auch aktive Verstellvorrichtungen beschrieben, welche Mittel zur Aktivierung der Einspritzung und Zündung der Brennkraftmaschine nach Beendigung ihres regulären Betriebes aufweisen. Diese Mittel werden eingesetzt, um gezielt Verbrennungsvorgänge in den Zylindern zu initiieren, mit denen ein bestimmtes Drehmoment auf die Kurbelwelle übertragen wird, so daß eine vorgebbare vorteilhafte Kurbelwinkelstellung angefahren werden kann.

Passive Verstellvorrichtungen können aber gemäß der WO 01/48373 ebenfalls eingesetzt werden, wobei diese passiven Verstellvorrichtungen nach Beendigung des regulären Betriebs der Brennkraftmaschine die im Nachlauf der Kurbelwelle noch vorhandene Drehbewegung ausnutzen und in der Art beeinflussen, daß die Kurbelwelle in der vorgegebenen vorteilhaften Kurbelwellenstellung zum Stillstand kommt. Als passive Verstellvorrichtung werden Mittel vorgeschlagen, die beispielsweise eine Gaswechselventilsteuerung umfassen, welche bei geeigneter Ansteuerung ein Bremsmoment auf die Brennkraftmaschine bzw. Kurbelwelle überträgt, so daß die Verzögerung der Welle und damit ihre Endstellung steuerbar wird.

Die in der WO 01/48373 aufgezeigten Verstellvorrichtungen sind aber nicht geeignet, die Endstellung der Kurbelwelle mit der nötigen Genauigkeit anzusteuern. Zudem machen die aktiven Verstellvorrichtungen entweder zusätzliche Bauteile - wie unter Umständen noch nicht vorhandene Elektromotoren - zur Aufbringung eines Verstelldrehmomentes erforderlich, oder sie arbeiten wie bei der Initiierung gezielter Verbrennungsvorgänge zum Anfahren der vorgegebenen Kurbelwinkelstellung mittels einer zusätzlichen Kraftstoffeinspritzung und -zündung. Gerade das letztgenannte Verfahren, welches die Verwendung von Kraftstoff erfordert, steht in krassem Gegensatz zu dem grundsätzlichen Ziel der Abschaltung der Brennkraftmaschine, nämlich durch das Abstellen der Brennkraftmaschine Kraftstoff zu sparen und damit den Kraftstoffverbrauch eines Fahrzeuges zu optimieren.

Vor diesem Hintergrund ist es die Aufgabe der vorliegenden Erfindung, eine Brennkraftmaschine der gattungsbildenden Art bereitzustellen, mit der gezielt - nach dem Abstellen der Brennkraftmaschine - eine für den Neustart der Brennkraftmaschine vorteilhafte, vorgebbare Endstellung der Kurbelwelle angefahren werden kann und mit der die nach dem Stand der Technik bekannten Nachteile überwunden werden, wobei die Endstellung insbesondere über die notwenige Genauigkeit verfügt.

Eine weitere Teilaufgabe der vorliegenden Erfindung ist es, ein Verfahren zum kontrollierten Abstellen einer derartigen Brennkraftmaschine bereitzustellen.

Gelöst wird die erste Teilaufgabe durch eine Brennkraftmaschine gemäß dem Oberbegriff des Anspruchs 1, die dadurch gekennzeichnet ist, dass die Brennkraftmaschine mit einem Überdruckventil ausgestattet ist, und ein zweites Hydraulikventil vorgesehen ist, welches mit dem Überdruckventil in Reihe - und zwar in Strömungsrichtung gesehen hinter dem Überdruckventil angeordnet - geschaltet ist.

Bei der erfindungsgemäßen Brennkraftmaschine wird das Antriebsmoment der Ölpumpe genutzt, um nach Abschalten der Brennkraftmaschine die gewünschte Endstellung der Kurbelwelle anzufahren.

Hierzu wird ein Hydraulikventil am Auslaß der Ölpumpe angeordnet. Durch Verkleinerung bzw. Vergrößerung des Austrittsquerschnittes des Auslasses und dem damit veränderten Strömungswiderstand kann der Öldruck in der Pumpe vergrößert bzw. verringert werden. Das für den Antrieb der Ölpumpe erforderliche Antriebsmoment ist aber gerade vom Öldruck abhängig, so daß durch Öffnen und Schließen des Hydraulikventils indirekt Einfluß auf das Antriebsmoment genommen werden kann. Ein Schließen des Ventils und damit eine Verkleinerung des Austrittsquerschnittes des Auslasses führt zu einem erhöhten Öldruck in der Pumpe, wodurch ein größeres Antriebsmoment erforderlich wird. Umgekehrt führt ein Öffnen des Ventils und damit eine Vergrößerung des Austrittsquerschnittes des Auslasses zu einem niedrigeren Öldruck in der Pumpe, so daß das für den Betrieb der Ölpumpe erforderliche Antriebsmoment abnimmt.

Der maximale Öldruck in der Ölpumpe wird durch den Öffnungsdruck des Überdruckventils begrenzt. Diese Ausführungsform der Brennkraftmaschine ermöglicht es, die Begrenzung durch ein zusätzliches, zweites Hydraulikventil aufzuheben, und damit den Öldruck in der Ölpumpe weiter zu steigern. Vorteile bietet dies insbesondere, weil das Anfahren der vorgegebenen Kurbelwinkelstellung mit einer um so höheren Genauigkeit erfolgen kann je größer das Antriebsmoment der Pumpe d. h. je größer der Öldruck in der Ölpumpe ist.

Durch Variation des Antriebsmomentes wird die Last, welche von der Ölpumpe - als Verbraucher - von der Kurbelwelle abgegriffen wird, variiert. Die nach Abstellen der Brennkraftmaschine im Nachlauf der Kurbelwelle noch vorhandene Drehbewegung wird durch Steuerung des Antriebsmomentes der Ölpumpe in der Art beeinflußt, daß die Kurbelwelle in der vorgegebenen vorteilhaften Kurbelwellenstellung zum Stillstand kommt.

Vorteilhaft sind Ausführungsformen der Brennkraftmaschine, bei denen das erste Hydraulikventil mehrstufig, insbesondere zweistufig, schaltbar ist. Vorteilhaft ist diese Ausführungsform, da eine überschaubare Anzahl an Schaltzuständen die Steuerung vereinfacht und weniger aufwendig macht.

Vorteilhaft sind aber auch Ausführungsformen der Brennkraftmaschine, bei denen das erste Hydraulikventil stufenlos regelbar ist. Vorteilhaft ist diese Ausführungsform, weil mit einem stufenlos regelbaren Hydraulikventil die Qualität d. h. die Genauigkeit der erreichten Endstellung der Kurbelwelle gesteigert werden kann.

Die zweite der Erfindung zugrunde liegende Teilaufgabe wird durch ein Verfahren der gattungsbildenden Art gelöst, das dadurch gekennzeichnet ist, daß die Ölpumpe an ihrem Auslaß mit einem ersten Hydraulikventil ausgestattet wird, mit welchem der Öldruck in der Ölpumpe durch Verändern des Querschnitts des Auslasses beeinflußbar ist, wodurch das Antriebsmoment der Ölpumpe mittels des Hydraulikventils steuerbar wird, so daß die nach Abschalten der Zündung und/oder der Kraftstoffzufuhr von der Brennkraftmaschine bis zu ihrem Stillstand abgegebene Energie mittels des steuerbaren Antriebsmoments der Ölpumpe kontrolliert in der Weise verbraucht wird, daß die Brennkraftmaschine d. h. die Kurbel- bzw. Nockenwelle, in einer vorbestimmbaren Position angehalten wird.

Bei Brennkraftmaschinen, die mit einer Motorsteuerung ausgestattet sind, sind Ausführungsformen des Verfahrens vorteilhaft, bei denen das erste Hydraulikventil mittels der Motorsteuerung gesteuert wird. Vorteile bietet dies, da die Motorsteuerung grundsätzlich auch die weiteren erforderlichen Informationen über den momentanen Betriebszustand der Brennkraftmaschine zur Verfügung hat und damit die geeignete zentrale Steuereinheit für die Steuerung des Hydraulikventils ist.

Bei Brennkraftmaschinen, die mit einem Überdruckventil ausgestattet sind, sind Ausführungsformen des Verfahrens vorteilhaft, bei denen ein zweites Hydraulikventil vorgesehen wird, welches mit dem Überdruckventil in der Art in Reihe geschaltet wird, daß es in Strömungsrichtung gesehen hinter dem Überdruckventil angeordnet ist.

Die Vorteile dieser Ausführungsform des erfindungsgemäßen Verfahrens zum kontrollierten Abstellen einer Brennkraftmaschine wurden bereits ausführlich im Rahmen der Erläuterung der Brennkraftmaschine erörtert. Dieses Verfahren zeichnet sich insbesondere durch die Aufhebung der Begrenzung des Öldrucks in der Ölpumpe aus.

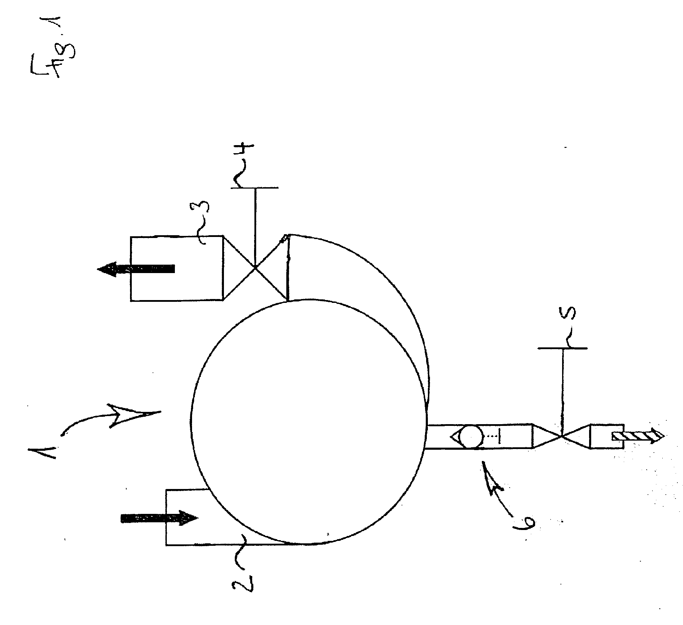

Im folgenden wird die Erfindung anhand eines Ausführungsbeispiels gemäß der Figur 1 näher beschrieben. Hierbei zeigt:
- Fig. 1: schematisch eine erste Ausführungsform einer Ölpumpe für eine Brennkraftmaschine.

Figur 1 zeigt schematisch eine erste Ausführungsform einer Ölpumpe 1 für eine Brennkraftmaschine. Das Verfahren zum kontrollierten Abstellen der Brennkraftmaschine wird im Zusammenhang mit der Erläuterung der Ölpumpe 1 der Brennkraftmaschine näher beschrieben.

Die Ölpumpe 1 verfügt über einen Einlaß 2 für den Eintritt und einen Auslaß 3 für den Austritt des Öls. An ihrem Auslaß 3 ist die Ölpumpe 1 mit einem ersten Hydraulikventil 4 ausgestattet. Der Öldruck in der Ölpumpe 1 kann mittels des ersten Hydraulikventils 4 durch Verändern des Querschnitts des Auslasses 3 beeinflußt werden.

Ein Schließen des Hydraulikventils 4 führt zu einer Verkleinerung des Austrittsquerschnittes des Auslasses 3 und damit zu einem erhöhten Öldruck in der Pumpe 1. Dies macht wiederum ein größeres Antriebsmoment erforderlich. Umgekehrt führt ein Öffnen des Ventils 4 zu einer Vergrößerung des Austrittsquerschnittes des Auslasses 3 und somit zu einem niedrigeren Öldruck in der Pumpe 1. Das für den Betrieb der Ölpumpe 1 erforderliche Antriebsmoment nimmt ab. Auf diese Weise wird das für den Antrieb der Ölpumpe 1 erforderliche Drehmoment indirekt mittels des Hydraulikventils 4 steuerbar.

Durch Variation des Antriebsmomentes wird die Last, welche von der Ölpumpe 1 - als Verbraucher - von der Kurbelwelle abgegriffen wird, variiert. Die nach Abstellen der Brennkraftmaschine im Nachlauf der Kurbelwelle noch vorhandene Drehbewegung wird durch Steuerung des Antriebsmomentes der Ölpumpe 1 in der Art beeinflußt, daß die Kurbelwelle in einer vorgegebenen und für den Neustart vorteilhaften Kurbelwellenstellung zum Stillstand kommt.

Die in Figur 1 dargestellte Ausführungsform einer Ölpumpe 1 ist mit einem Überdruckventil 6 ausgestattet und verfügt zudem über ein zweites Hydraulikventil 5.

Das zweite Hydraulikventil 5 ist mit dem Überdruckventil 6 in Reihe geschaltet und in Strömungsrichtung gesehen hinter dem Überdruckventil 6 angeordnet. Der maximale Öldruck in der Ölpumpe 1 wird grundsätzlich durch den Öffnungsdruck des Überdruckventils 6 begrenzt. Durch das zusätzliche, zweite, hinter dem Überdruckventil 6 angeordnete Hydraulikventil 5 kann der Öldruck in der Ölpumpe 1 weiter gesteigert werden. Die durch das Überdruckventil 6 vorgegebene Öldruckbegrenzung wird aufgehoben.

Vorteile bietet dies, weil das kontrollierte Abstellen der Brennkraftmaschine d. h. das Anfahren der vorgegebenen Kurbelwinkelstellung mit einer um so höheren Genauigkeit erfolgen kann je größer das Antriebsmoment der Pumpe 1 d. h. je größer der Öldruck in der Ölpumpe 1 ist.

### Bezugszeichen

- 1: Ölpumpe
- 2: Einlaß
- 3: Auslaß
- 4: erstes Hydraulikventil
- 5: zweites Hydraulikventil
- 6: Überdruckventil

## Patentansprüche

1. Brennkraftmaschine umfassend eine Ölpumpe (1), die über einen Einlaß (2) und einen Auslaß (3) verfügt, wobei die Ölpumpe (1) an ihrem Auslaß (3) mit einem ersten Hydraulikventil (4) ausgestattet ist, mit welchem der Öldruck in der Ölpumpe (1) durch Verändern des Querschnitts des Auslasses beeinflußbar ist, so daß das notwendige Antriebsmoment der Ölpumpe (1) mittels des Hydraulikventils (4) steuerbar wird,
**dadurch gekennzeichnet, dass**
die Brennkraftmaschine mit einem Überdruckventil (6) ausgestattet ist, und ein zweites Hydraulikventil (5) vorgesehen ist, welches mit dem Überdruckventil (6) in Reihe - und zwar in Strömungsrichtung gesehen hinter dem Überdruckventil (6) angeordnet - geschaltet ist.

2. Brennkraftmaschine nach Anspruch 1,
**dadurch gekennzeichnet, dass**
das erste Hydraulikventil (4) mehrstufig schaltbar ist.

3. Brennkraftmaschine nach Anspruch 1 oder 2,
**dadurch gekennzeichnet, dass**
das erste Hydraulikventil (4) zweistufig schaltbar ist.

4. Brennkraftmaschine nach Anspruch 1,
**dadurch gekennzeichnet, dass**
das erste Hydraulikventil (4) stufenlos regelbar ist.

5. Verfahren zum kontrollierten Abstellen einer Brennkraftmaschine, die eine Ölpumpe (1) aufweist, welche über einen Einlaß (2) und einen Auslaß (3) verfügt,
**dadurch gekennzeichnet, dass**
die Ölpumpe (1) an ihrem Auslaß (3) mit einem ersten Hydraulikventil (4) ausgestattet wird, mit welchem der Öldruck in der Ölpumpe (1) durch Verändern des Querschnitts des Auslasses (3) beeinflußbar ist, wodurch das Antriebsmoment der Ölpumpe (1) mittels des Hydraulikventils (4) steuerbar wird, so daß die nach Abschalten der Zündung und/oder der Kraftstoffzufuhr von der Brennkraftmaschine bis zu ihrem Stillstand abgegebene Energie mittels des steuerbaren Antriebsmoments der Ölpumpe (1) kontrolliert in der Weise verbraucht wird, daß die Brennkraftmaschine d.h. die Kurbel- bzw. Nockenwelle, in einer vorbestimmbaren Position angehalten wird, wobei die Brennkraftmaschine mit einem Überdruckventil (6) ausgestattet wird, und
ein zweites Hydraulikventil (2) vorgesehen wird, welches mit dem Überdruckventil (6) in der Art in Reihe geschaltet wird, dass es in Strömungsrichtung gesehen hinter dem Überdruckventil (6) angeordnet ist.

6. Verfahren zum kontrollierten Abstellen einer Brennkraftmaschine nach Anspruch 5, wobei die Brennkraftmaschine mit einer Motorsteuerung ausgestattet ist,
**dadurch gekennzeichnet, dass**
das erste Hydraulikventil (4) mittels der Motorsteuerung gesteuert wird.

## Claims

1. Internal combustion engine comprising an oil pump (1) which has an inlet (2) and an outlet (3), the oil pump (1) being equipped at its outlet (3) with a first hydraulic valve (4) with which the oil pressure in the oil pump (1) can be influenced by changing the cross section of the outlet so that the necessary drive torque of the oil pump (1) can be controlled by means of the hydraulic valve (4), **characterized in that** the internal combustion engine is equipped with an overpressure valve (6) and a second hydraulic valve (5) is provided which is connected in series with the overpressure valve (6), specifically arranged downstream of the overpressure valve (6) in the direction of flow.

2. Internal combustion engine according to Claim 1, **characterized in that** the first hydraulic valve (4) can be switched in a multistage fashion.

3. Internal combustion engine according to Claim 1 or 2, **characterized in that** the first hydraulic valve (4) can be switched in a two-stage fashion.

4. Internal combustion engine according to Claim 1, **characterized in that** the first hydraulic valve (4) can be controlled in an infinitely variable fashion.

5. Method for the controlled shutting down of an internal combustion engine which has an oil pump (1) which has an inlet (2) and an outlet (3), **characterized in that** the oil pump (1) is equipped at its outlet (3) with a first hydraulic valve (4) with which the oil pressure in the oil pump (1) can be influenced by changing the cross section of the outlet (3) as a result of which the drive torque of the oil pump (1) is controlled by means of the hydraulic valve (4) so that the energy which is output by the internal combustion engine up to its stationary state after the ignition and/or the fuel supply have been switched off is consumed in a controlled fashion by means of the controllable drive torque of the oil pump (1) such that the internal combustion engine, i.e. the crankshaft or camshaft, is stopped in a predeterminable position, the internal combustion engine being equipped with an overpressure valve (6), and a second hydraulic valve (2) being provided which is connected in series with the overpressure valve (6) in such a way that it is arranged downstream of the overpressure valve (6) viewed in the direction of flow.

6. Method for the controlled shutting down of an internal combustion engine according to Claim 5, the internal combustion engine being equipped with an engine controller, **characterized in that** first hydraulic valve (4) is controlled by means of the engine controller.

## Revendications

1. Moteur à combustion interne comprenant une pompe à huile (1) qui dispose d'une entrée (2) et d'une sortie (3), la pompe à huile (1) étant équipée à sa sortie (3) d'une première vanne hydraulique (4) avec laquelle la pression de l'huile dans la pompe à huile (1) peut être influencée en modifiant la section transversale de la sortie de sorte qu'il est possible de commander le couple d'entraînement nécessaire de la pompe à huile (1) au moyen de la vanne hydraulique (4), **caractérisé en ce que** le moteur à combustion interne est équipé d'une soupape de surpression (6) et qu'il est prévu une deuxième vanne hydraulique (5) qui est branchée en série avec la soupape de surpression (6), à savoir disposée après la soupape de surpression (6) en regardant dans le sens de l'écoulement.

2. Moteur à combustion interne selon la revendication 1, **caractérisé en ce que** la première vanne hydraulique (4) est commutable sur plusieurs niveaux.

3. Moteur à combustion interne selon la revendication 1 ou 2, **caractérisé en ce que** la première vanne hydraulique (4) est commutable sur deux niveaux.

4. Moteur à combustion interne selon la revendication 1, **caractérisé en ce que** la première vanne hydraulique (4) est réglable progressivement.

5. Procédé d'arrêt contrôlé d'un moteur à combustion interne qui présente une pompe à huile (1), laquelle dispose d'une entrée (2) et d'une sortie (3), **caractérisé en ce que** la pompe à huile (1) est équipée à sa sortie (3) d'une première vanne hydraulique (4) avec laquelle la pression d'huile dans la pompe à huile (1) peut être influencée en modifiant la section transversale de la sortie (3), ce qui permet de commander le couple d'entraînement de la pompe à huile (1) au moyen de la vanne hydraulique (4) de sorte que l'énergie délivrée par le moteur à combustion interne après l'arrêt de l'allumage et/ou de l'arrivée de carburant jusqu'à son immobilisation est utilisée de manière contrôlée au moyen du couple d'entraînement commandable de la pompe à huile (1) de telle sorte que le moteur à combustion interne, c'est-à-dire le vilebrequin ou l'arbre à cames soit maintenu dans une position pouvant être prédéfinie, le moteur à combustion interne étant équipé d'une soupape de surpression (6) et une deuxième vanne hydraulique (2) étant prévue, laquelle est branchée en série avec la soupape de surpression (6) de manière à ce qu'elle se trouve derrière la soupape de surpression (6) en regardant dans le sens de l'écoulement.

6. Procédé d'arrêt contrôlé d'un moteur à combustion interne selon la revendication 5, le moteur à combustion interne étant équipé d'une commande de moteur, **caractérisé en ce que** la première vanne hydraulique (4) est commandée au moyen de la commande de moteur.
